Europäisches Patentamt

European Patent Office

Office européen des brevets

(11) Publication number: **0 109 226**
**A1**

(12) **EUROPEAN PATENT APPLICATION**

(21) Application number: **83306641.8**

(22) Date of filing: **01.11.83**

(51) Int. Cl.³: **A 23 L 1/176**

(30) Priority: **01.11.82 US 438097**

(43) Date of publication of application: **23.05.84**
**Bulletin 84/21**

(84) Designated Contracting States: **DE GB**

(71) Applicant: **GENERAL FOODS CORPORATION, 250 North Street, White Plains, N.Y. 10625 (US)**

(72) Inventor: **Coleman, Edward Charles, 166-04 24th Avenue, Whitestone New York 11357 (US)**
Inventor: **Mills, Curtis Jay, 15, West Inner Circle, Dover Delaware 19901 (US)**

(74) Representative: **Baillie, Iain Cameron et al, c/o Ladas & Parry Isartorplatz 5, D-8000 München 2 (DE)**

(54) **Improved product and process for imparting fried taste to baked foodstuffs.**

㉟ Coating mixes for imparting a fried taste, texture and appearance to baked foodstuffs are improved by incorporating therein from 10 to 50% by weight of deep far fried farinaceous particles.

EP 0 109 226 A1

ASE 2963

## DESCRIPTION
### IMPROVED PRODUCT AND PROCESS FOR IMPARTING FRIED TASTE TO BAKED FOODSTUFFS

### Technical Field

This invention relates to edible food coatings and more particularly is directed to a food coating to be applied to the food prior to baking for the purpose of imparting a fat fried appearance, texture and especially taste to the baked food.

Many foods such as poultry, meat, fish and vegetables are breaded with a light coating of flour and/or breadcrumbs which on frying in oil develops into a characteristic crispy, brown-colored coating.

However, the messiness involved with the preparation of fried foods, the ever-present danger of spattering oil, and the unfavorable dietary aspects associated with fried foods have led recently to the development of coatings which attempt to impart a fried appearance to a foodstuff which is baked and yet retain the appealing color, taste, and texture associated with fried foods.

### Background Art

Several U.S. Patents, including 4,260,637 to Rispoli et al.; 4,218,485 to Lee et al.; 4,208,442 to Evans et al.; 4,068,009 to Rispoli et al.; 3,952,110 to Knight et al.; 3,852,501 to Fazzina et al.; 3,843,827 to Lee et al. and 3,586,512 to Man- cuso et al., disclose dry coating formulations which are useful to provide a fried appearance, taste and texture to baked foodstuffs such as chicken. While each of these patents represents an advance in the art, there remain opportunities to further improve upon the characteristics of the coated and baked comestible so as to render one or more of these characteristics more similar to the character of deep fat fried comestibles.

U.S. Patent No. 3,486,904 discloses the use of a prefried cereal breading material which is applied directly onto batter coated foodstuffs which are then frozen, this technique being an alternative to deep fat frying the batter-coated comestible prior to freezing.

## DISCLOSURE OF THE INVENTION

Dry coating mixes designed to impart a fried appearance, taste and texture to baked foodstuffs are improved by the incorporation of particles of a deep fat fried, farinaceous material. The resulting composition may be applied to such foodstuff categories as poultry, meat, fish and vegetables prior to baking in order to impart a simulated fried appearance, taste and texture to the foodstuff. The foodstuffs contemplated for use in this invention are uncooked, preferably fresh (i.e. non-frozen), foods which are coated with the composition of this invention immediately prior to baking. Examples of the foodstuffs which are suitable for use in this invention are chicken pieces and cutlets, pork chops and cutlets, fish fillets and eggplant strips.

The fried farinaceous particles of this invention can be produced via many different and varied processing schemes. Included among the more prac- ticle procedures would be to extrude continuous strands of dough into a fryer and thereafter draining or otherwise removing excess oil and then comminuting the fried strands. Typically the particles will be screened to obtain a desired particle size fraction. Frying of the dough will normally be conducted in a vegetable oil or shortening bath at a temperature of from about 320°F (160°C) to 440°F (226.7°C) for a period of time of from 30 seconds to 4 minutes.

The dough may be either an unleavened dough such as used in the manufacture of noodles or may be yeast-leavened or chemically-leavened dough. As an alternative to a continuous processing scheme, it would, of course, be possible to form individual strips of dough which are then deep fat fried. It may be desirable to stale the fried dough for one or more days in order to facilitate the comminution step. Unleavened doughs are considered to be preferred for use in this invention.

The fried farinaceous particles of this invention will be combined with other functional ingredients so as to produce a coating composition containing from 10% to 50%, preferably from 15% to 35% by weight of the fried particles. The remaining ingredients which may include any combination of flour, bread crumbs, cereal fines, protein-film formers, modified cornstarches, dextrins, binding agents, powdered fat, flavors, spices, colors and the like. These ingredients may constitute a pre-existing coating mix such as those described in U.S. Patent Nos. 4,260,637, 4,218,485, 4,408,442, 3,857,501 and 3,843,827 (all of which are hereby specifically incorporated by reference) or may be specially formulated for combination with the pre- fried particles of this invention. The incorporation of unfried coating ingredients with the fried farinaceous particles has been found to provide increased stability towards oxidative rancidity of the fried particles.

The coating composition will typically contain from 17% to 35% by weight of bread crumbs, preferably Japanese bread crumbs, such as described in U.S. Patent 4,068,009 to Rispoli et al., and from 10% to 30% by weight of starch containing materials such as flour, cereal fines, and the like to facilitate binding of the coating composition onto the foodstuff. Additional ingredients such as from 1.5% to 30% of film forming agents such as low (less than 15) D.E. dextrins, and/or modified cornstarches, and/or film-forming proteins such as gelatin, sodium caseinate, soy protein isolate, egg albumin and the like, and up to 5%, preferably from 0.6% to 3.5% by weight natural spices, may also be employed.

The deep fat fried particles of this invention will be comminuted and/or screened to obtain a particle fraction which will blend well with the other particulate ingredients. The fried particles will typically be at least 40% by weight through a U.S. standard screen size No. 14, with less than about 5% by weight of the particles being retained on a U.S. Standard screen No. 5. The fried particles will have a moisture content of less than about 5% by weight and an oil content of from about 12% to 30%. The fat and moisture content of the product can be readily adjusted not only by selection of the initial dough or batter formulation but also by controlling the time and temperature of the frying operation and insertion of an optional drying step, either before or after comminuting the fried farinaceous material.

The coating compositions of this invention which contain the pre-fried, particulate, farinaceous material is designed for direct application to batter-coated or moistened foodstuffs immediately prior to baking in an oven. The foodstuff may be moistened with water or milk or coated with a suitable batter such as egg; egg and water; egg and milk; flour, egg and milk; flour and water; flour and milk; and the like. The foodstuff can be coated with batter by dipping, spraying, immersing, etc. The foodstuff may be dusted with flour before being batter coated in order to obtain a more coherent coating.

The coating composition can be applied to the moistened or batter coated foodstuff by any common means, such as by shaking the coating composition and the foodstuff together in a closed bag, rolling the foodstuff in the coating composition or pressing the coating composition firmly onto the surfaces of the foodstuff. After this coating step has been completed the foodstuff is promptly, without an intervening storage or freezing step and typically within about 30 minutes, baked in an oven until done.

Baking may be done in a conventional thermostatically-controlled oven, in a microwave oven or by using any combination thereof. Generally, the temperature employed in a conventional oven will be within the range of about 325 to 450°F (162.8 to 232.2°C). In order to prevent possible sticking of the coated comestible to the baking surface the surface may be coated wtih a minimal amount of oil.

When the comestible is coated and cooked in accordance with this invention the resultant foodstuff possess a coherent, crisp coating which has a

-6-

deep fat fried color, flavor and appearance without an excessive oily taste or character. The moistness and tenderness of the product is also highly rated.

BEST MODE FOR CARRYING OUT THE INVENTION

The preferred methods of carrying out this invention are best given by way of the following examples which however are not to be regarded as limiting the scope of invention. The percentages and ratios expressed in the examples are on a weight basis.

Example I

A dough was prepared consisting of 79% wheat flour, 20% water and 1% salt. The dough was formed into 1/8 inch (3.175 mm) diameter strands by extrusion through a meat extruder. The strands were fried in a continuous manner by passing through a vegetable oil bath maintained at 370°F. The residence time for the strands in the bath was approximately 50 seconds. After excess oil was permitted to drain from the strands, the strands were comminuted using a slicer and screened to yield a particle size distribution of 47% through a U.S. Standard Sieve No. 8 and retained on a U.S. Standard Sieve No. 14, and 53% through a U.S. Standard Sieve No. 14.

The fried particles, having a composition of about 77%, flour, 19% vegetable oil, 3% water and 1% salt, were blended in a 25:75 ratio with a coating base mix which had the following formulation:

| Ingredient | Weight |
|---|---|
| Japanese Style Bread Crumbs | 27.2 |
| Modified Cornstarch | 27.1 |
| Precooked Rice Fines | 14.1 |

| Ingredient | Weight |
|---|---|
| Powdered Shortening | 9.4 |
| Rice Flour | 8.2 |
| Egg White Solids | 2.1 |
| Lecithin | 1.8 |
| Ground Paprika | 1.4 |
| Black Pepper | 1.4 |

Approximately 80 grams of the composite coating mix were used to coat 680 grams of moistened chicken pieces (moistened with 1.2 ounces (35.5 ml) of water) by shaking the chicken and mix together in a plastic bag. The coated pieces were then promptly arranged (skin side up) in a single layer in an ungreased shallow baking pan and baked at 400°F for 60 minutes. The baked product had an excellent fried flavor, texture and appearance.

## Example II

Following the procedure set forth in Example I, fried farinaceous particles were prepared having the following formulation:

| Ingredient | Weight % (before frying) | Weight % (after frying) |
|---|---|---|
| Precooked Rice Fines | 39.3 | 45.4 |
| Water | 22.1 | 2.0 |
| Self-Rising Flour | 20.1 | 23.3 |
| Hydrogenated Vegetable Oil | 13.8 | 24.0 |
| Modified Cornstarch | 1.9 | 2.2 |
| Salt | 1.5 | 1.6 |
| Dextrin (10 D.E.) | 1.0 | 1.1 |
| Silicon Dioxide | 0.3 | 0.4 |

The pre-fried particles were blended in a 15:85 ratio with a coating base mix which had the following formulation:

0109226

-8-

| Ingredient | | Weight |
|---|---|---|
| Coating Premix: | | 40.0 |
| Yellow Corn Flour | - 44.3 | |
| Rice Flour | - 31.0 | |
| Modified Cornstarch | - 11.5 | |
| Dextrin (10 D.E.) | - 1.0 | |
| Salt | - 1.0 | |
| Glyceryl Monostearate | - 0.6 | |
| Caramel Color | - 0.1 | |
| Japanese Style Bread Crumbs | | 39.6 |
| Salt | | 10.8 |
| Dextrin (10 D.E) | | 6.6 |
| Paprika | | 1.8 |
| Lecithin | | 1.1 |
| Black Peper | | 0.1 |

This coating mix was used to prepare baked chicken in the manner of Example I resulting in a baked product having comparable desirable characteristics.

Having thus described the invention what is claimed is:

A70h

## CLAIMS

1. A dry coating mix for imparting the texture, taste and appearance of deep-fat fried foods to baked foodstuffs comprising from 10 to 50% by weight of deep fat fried farinaceous particles, 7 to 35% by weight bread crumbs, from 1.5 to 30% by weight of a film forming agent selected from the group consisting of low D.E. dextrins, proteins, modified cornstarch, and combinations thereof, and up to 5% natural spices, said fried farinaceous particles containing from 12 to 30% by weight of oil.

2. The coating mix of claim 1 wherein the farinaceous particles have a particle size of at least 40% by weight minus No. 14 U.S.S. Sieve and less than 5% plus No. 5 U.S.S. Sieve.

3. The coating mix of claim 1 wherein the level of fried particles is from 15 to 35% by weight.

4. The coating mix of claim 1 wherein the fried particles have a moisture content of less than about 5% by weight.

5. A process for preparing a baked coated foodstuff with the texture, taste and appearance of a fried, coated foodstuff comprising:

a) moistening the surface of the foodstuff;

b) coating the moistened surface with a dry mix which comprises from 10 to 50% by weight of deep fat fried farinaceous particles, 10 to 35% by weight bread crumbs, from 1.5 to 15% by weight of a film forming agent selected from the group consisting of low D.E. dextrins, proteins and combinations thereof, and up to 5% natural spices, said fried farinaceous particles containing from 12 to 30% by weight of oils, and then,

c) promptly baking the coated comestible.

6. The method of claim 5 wherein the deep fat fried farinaceous particles are prepared by forming strips of an unleavened dough, frying said dough strips and comminuting said fried dough strips.

7. The method of claim 6 wherein he dough is fried to a moisture content of less than about 5% by weight.

A70h

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y | US-A-3 486 904 (J. ZIEGLER) <br> * Claims 1-3; column 6, lines 63-66; column 7, lines 4-21 * | 1-7 | A 23 L 1/176 |
| D,Y | US-A-4 218 485 (J. LEE et al.) <br> * Claims 1-14; example 1 * | 1-7 | |
| D,A | EP-A-0 017 338 (GENERAL FOODS) <br> * Claims 1-6; examples * | 1,2 | |
| A | CA-A- 980 164 (E. BREMNER et al.) <br> * Example * | 1 | |

TECHNICAL FIELDS
SEARCHED (Int. Cl. 3)

A 23 L
A 23 P

The present search report has been drawn up for all claims

| Place of search <br> THE HAGUE | Date of completion of the search <br> 02-01-1984 | Examiner <br> DESMEDT G.R.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82